(19) **Europäisches Patentamt / European Patent Office / Office européen des brevets**

(11) **EP 4 394 661 A1**

(12) # EUROPEAN PATENT APPLICATION

(43) Date of publication:
**03.07.2024 Bulletin 2024/27**

(21) Application number: **23219192.4**

(22) Date of filing: **21.12.2023**

(51) International Patent Classification (IPC):
$G06N\ 3/063^{(2023.01)}$    $G06N\ 3/084^{(2023.01)}$
$G06N\ 3/0464^{(2023.01)}$    $G06N\ 3/0455^{(2023.01)}$
$G06N\ 3/048^{(2023.01)}$    $G06F\ 15/00^{(2006.01)}$
$G06T\ 1/20^{(2006.01)}$

(52) Cooperative Patent Classification (CPC):
**G06N 3/063; G06F 15/00; G06N 3/0455;
G06N 3/0464; G06N 3/048; G06N 3/084;
G06T 1/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 FR 2214620**

(71) Applicant: **Commissariat à l'énergie atomique
et aux énergies alternatives
75015 Paris (FR)**

(72) Inventors:
- **DALGATY, Thomas
  38054 GRENOBLE CEDEX 09 (FR)**
- **LEPECQ, Maria
  91191 GIF SUR YVETTE (FR)**
- **CHEVOBBE, Stéphane
  91191 GIF SUR YVETTE (FR)**

(74) Representative: **Cabinet Beaumont
4, Place Robert Schuman
B.P. 1529
38025 Grenoble Cedex 1 (FR)**

(54) **NEURAL NETWORK ARCHITECTURE FOR A SYSTOLIC PROCESSOR ARRAY AND METHOD OF PROCESSING DATA USING A NEURAL NETWORK**

(57) The present disclosure relates to an electronic circuit implementing a neural network, the electronic circuit comprising: an array of processing elements (PE) implementing one or more neurons of the neural network, each processing element comprising a data processing circuit, and a local memory configured to store neuron data; and data propagation circuitry configured to perform forward or reverse lateral mixing of the neuron data by propagating, synchronously by each processing element, the neuron data to the local memory of each processing element from the local memory of one or more neighboring processing elements, wherein each of the processing elements is configured to process, during a first processing iteration, the neuron data from the one or more neighboring processing elements in order to generate updated neuron data and to store the updated neuron data in the local memory for use during a subsequent processing iteration.

**Fig. 4**

**Description**

<u>Technical field</u>

The present disclosure relates generally to electronic circuits, and in particular to a neural network architecture for a systolic processor array and method of processing data using such a neural network architecture.

<u>Background art</u>

Existing neural network architectures used in computer vision and other applications are generally based on the sequential execution of convolutional and fully-connected (i.e. linear) layers of neurons. In such a standard fully-connected neural network, a single "flat" layer of neuron activation values, represented as a vector, are propagated by each layer to the subsequent layer, after multiplying the vector by a single weight matrix that is global for the layer. Deep neural networks comprise several such layers, which each apply a similar such operation until an output value is obtained.

A systolic processor array is a homogeneous network of data processing units, often referred to as processing elements (PEs), each of which is configured to independently compute a partial result based on data received from upstream neighbors, and passes this result to downstream neighbors.

It has been proposed to use a systolic processor array as a hardware accelerator for implementing a deep convolutional neural network (CNN). For example, a solution is described in the publication by Chen, Yu-Hsin, et al. "Eyeriss: An energy-efficient reconfigurable accelerator for deep convolutional neural networks", IEEE journal of solid-state circuits 52.1 (2016): 127-138.

However, a drawback of existing solutions for using systolic processor arrays to implement CNNs is that they tend to spend a significant proportion of the total processing time organizing and regrouping intermediate data, and sometimes re-programming the PEs with a sequence of codes specific to each step and to each network layer. This results in a solution which is demanding on processing resources and/or relatively slow to execute.

There is thus a need for a new neural network architecture, as well as a new neural network execution strategy for execution on systolic PE arrays, that provides improved performance with respect to existing solutions, for example in terms of latency.

<u>Summary of Invention</u>

It is an aim of embodiments of the present disclosure to at least partially address one or more needs in the prior art.

According to one aspect, there is provided an electronic circuit implementing a neural network, the electronic circuit comprising: an array of processing elements, each processing element comprising a data processing circuit and a local memory, each processing element implementing one or more neurons of the neural network, the local memory of each processing element being configured to store neuron data associated with the one or more neurons implemented by the neural network; and data propagation circuitry configured to perform forward or reverse lateral mixing of the neuron data stored by the local memory of each processing element by propagating, synchronously by each processing element, the neuron data to the local memory of each processing element from the local memory of one or more neighboring processing elements of each processing element, wherein each of the processing elements is configured to process, during a first processing iteration, the neuron data from the one or more neighboring processing elements in order to generate updated neuron data and to store the updated neuron data in the local memory for use during a subsequent processing iteration.

According to one embodiment, the data processing circuit of each processing element is further configured to calculate an intermediate value based on the neuron data from the one or more neighboring processing elements.

According to one embodiment, the neural network comprises an input layer and at least two hidden layers, the input layer and at least two hidden layers being implemented by the array of processing elements, wherein the data processing circuit of each processing element is configured to calculate the intermediate value based on the neuron data in relation with each of the hidden layers.

According to one embodiment, the data propagation circuitry is configured to perform forward or reverse lateral mixing of the neuron data stored by the local memory of each processing element by propagating the neuron data to the local memory of each processing element from a plurality of the neighboring processing elements over a plurality of iterations, each processing element being configured to receive, synchronously on each iteration, the neuron data stored by the local memory of one of the plurality of neighboring processing elements, at least partially overwriting the neuron data stored in its local memory.

According to one embodiment, the data propagation circuitry is configured to propagate the neuron data to the local memory of the one or more neighboring processing elements of the array according to an expanding spiral shift sequence.

According to one embodiment, the data propagation circuitry comprises, for each processing element, at least one multiplexer configured to select from which neighboring processing element and/or to which neighboring processing element the neuron data is propagated.

According to one embodiment, the array of processing elements is configured to receive one or more images as input data.

According to one embodiment, the data propagation circuitry is configured to perform forward lateral mixing of the neuron data, and wherein the neuron data of each processing element is an activation state of the one or more neurons implemented by the processing element.

According to one embodiment, the data propagation circuitry is configured to perform reverse lateral mixing of the neuron data, wherein the neuron data of each processing element comprises: an activation state of the one or more neurons implemented by the processing element; and/or a parameter representing an error signal.

According to one embodiment, the neural network is a convolutional neural network.

According to a further aspect, there is provided an imaging device comprising a stacked formed of a top tier comprising an image sensor and a bottom tier comprising the above electronic circuit.

According to a further aspect, there is provided a method of propagating data in a neural network, the method comprising: storing neuron data associated with one or more neurons implemented by the neural network in a local memory of each processing element of an array of processing elements, each processing element of the array comprising a data processing circuit and the local memory; calculating, by the data processing circuit of each processing element, an intermediate value based on the neuron data; and performing, by data propagation circuitry, forward or reverse lateral mixing of the neuron data stored by the local memory of each processing element by propagating, synchronously by each processing element, the neuron data to the local memory of each processing element from the local memory of one or more neighboring processing elements of each processing element, wherein each of the processing elements is configured to process, during a first processing iteration, the neuron data from the one or more neighboring processing elements in order to generate updated neuron data and to store the updated neuron data in the local memory for use during a subsequent processing iteration.

According to one embodiment, the method further comprises calculating, by the data processing circuit of each processing element, an intermediate value based on the neuron data from the one or more neighboring processing elements.

According to one embodiment, the neural network comprises an input layer and at least two hidden layers, the input layer and at least two hidden layers being implemented by the array of processing elements, the method further comprising calculating, by the data processing circuit of each processing element, the intermediate value based on the neuron data in relation with each of the hidden layers.

According to one embodiment, performing the forward or reverse lateral mixing of the neuron data stored by the local memory of each processing element is performed by propagating the neuron data to the local memory of each processing element from a plurality of the neighboring processing elements over a plurality of iterations, each processing element being configured to receive, synchronously on each iteration, the neuron data stored by the local memory of one of the plurality of neighboring processing elements, at least partially overwriting the neuron data stored in its local memory.

Brief description of drawings

The foregoing features and advantages, as well as others, will be described in detail in the following description of specific embodiments given by way of illustration and not limitation with reference to the accompanying drawings, in which:

Figure 1 illustrates a fully-connected neural network according to an example embodiment;

Figure 2 schematically illustrates an array of processing elements according to an example embodiment of the present disclosure;

Figure 3 schematically illustrates a weight matrix according to an example embodiment of the present disclosure;

Figure 4 schematically illustrates forward lateral mixing using an array of processing elements according to an example embodiment of the present disclosure;

Figure 5 schematically illustrates a 3-by-3 array of processing elements according to an example embodiment of the present disclosure;

Figure 6 schematically illustrates a processing element module comprising a processing element and input/output multiplexers according to an example embodiment;

Figure 7 schematically illustrates a processing element module comprising a processing element and input/output multiplexers according to a further example embodiment;

Figure 8 schematically represents a forward lateral mixing operation according to an example embodiment of the present disclosure;

Figure 9 schematically illustrates memory portions of the array of processing elements of Figure 8 according to an example embodiment of the present disclosure;

Figure 10 schematically illustrates a shift sequence between local memories in the array of processing elements of Figure 8 during forward lateral mixing according to an example embodiment of the present disclosure;

Figure 11 schematically illustrates a radius of influence of a processing element for one, two and three lateral mixing layers according to an example embodiment of the present disclosure;

Figure 12 schematically illustrates an imaging device comprising an image sensor stacked on a data processing chip according to an example embodiment of the present disclosure;

Figure 13 is a flow diagram illustrating operations in a method of inference involving forward lateral mixing according to an example embodiment of the present disclosure;

Figure 14 schematically illustrates reverse lateral mixing using an array of processing elements according to an example embodiment of the present disclosure;

Figure 15 schematically illustrates a backpropagation operation according to an example embodiment of the present disclosure;

Figure 16 is a flow diagram illustrating operations in a method of training involving reverse lateral mixing according to an example embodiment of the present disclosure;

Figure 17 schematically illustrates backpropagation operations of several layers according to an example embodiment of the present disclosure; and

Figure 18 is a graph representing test results according to an example embodiment of the present disclosure.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

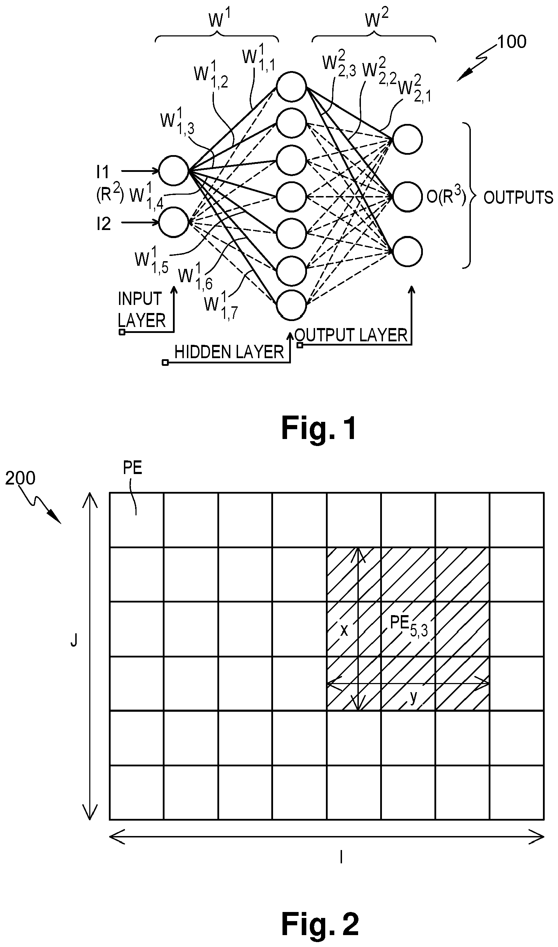

Figure 1 schematically illustrates a fully-connected neural network 100 according to an example embodiment.

The neural network 100 comprises three layers, an input layer (INPUT LAYER), a single hidden layer (HIDDEN LAYER), and an output layer (OUTPUT LAYER). In alternative embodiments, there could be more than one hidden layer. Each layer for example comprises a number of neurons. For example, the neural network 100 corresponds to a neural network model with a two-dimensional data space, and there are thus two visible neurons in the input layer receiving the corresponding input values I1 and I2. The model has a hidden layer with seven hidden neurons, and thus corresponds to a matrix of dimensions $\mathbb{R}^{2*7}$ . In the example of Figure 1, there are three neurons in the output layer, providing an output O of the network 100.

In the general case that the neural network 100 has $L$ hidden layers, the function $O = H_\theta(I)$ applied by the neural network 100 is for example a functions aggregation, comprising an associative function $H_l$ within each layer $l$, these functions being connected in a chain to map $O = H_\theta(I) = H_L(...(H_2(H_1(I)) ...))$. There are just two such functions in the simple example of Figure 1, corresponding to those of the hidden layer and the output layer.

An output of each neuron of each layer $l$, except the output layer, is coupled to each neuron of the subsequent layer via a corresponding synapse, the synapses of each layer $l$ being associated with synaptic weight matrix $W_{j,k}^{l}$ .

In particular, each neuron j of each layer $l$-1 of the network 100 is coupled to each neuron k of the next layer $l$ via a corresponding synapse, associated with a synaptic weight $W_{j,k}^{l}$ .

The implementation of a neural network such as the one of Figure 1 on a processing device generally involves the sequential execution of the linear array of neurons, but this implies that a significant amount of time and processing resources is occupied organizing and regrouping intermediate data, with numerous memory load and store operations. This leads to a solution which is slow and/or highly consuming in energy.

Another type of neural network is a convolutional neural network, in which each layer involves applying a 2-dimensional (2D) convolution. Thus, the input states provided to each neuron of each PE from the neurons of the previous layer is no longer a vector of scalars, but a feature map resulting from the 2D convolution based on the corresponding kernel.

Figure 2 schematically illustrates an array 200 of processing elements according to an example embodiment of the present disclosure. The array 200 is configured to implement a neural network having one or more hidden layers, like the neural network of Figure 1. The array 200 is for example configured to implement a deep lateral mixer neural network, which is a network in which, rather than being a fully connected network, the neuron interconnections from one layer to the next are defined by the spatial relationship between the neurons, as will be described in more detail below. Such an architecture is for example particularly suited to processing two-dimensional input data such as images, although other applications are equally possible.

In the example of Figure 2, the array 200 is a 2-dimensional array of I by J processing elements PE, where I is equal to 8 and J is equal to 6, although in other embodiments, different values of I and J would be possible, there for example being at least four processing elements in the array.

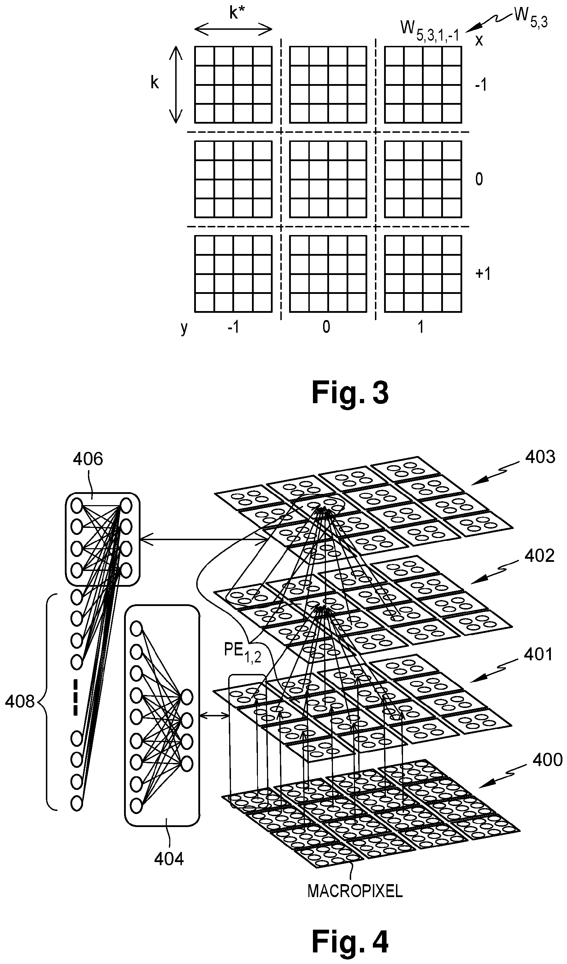

Each of the processing elements implements k neurons, where k is for example equal to one or more, and for example equal to at least four. Embodiments described herein are based on there being four neurons implemented by each processing element. Each processing element $PE_{i,j}$ for $i \in [0,I]$ and $j \in [0,I]$, for example stores a k-element vector $h_{i,j}$, indicating a hidden state, which will also be referred to herein as an activation state, of the k neurons of the processing element PE. Each processing element PE also for example stores a weight matrix $W_{i,j}$, which defines how the activation states of neighboring processing elements are propagated to a given PE. In some embodiments, as described in more detail below in relation with Figure 3, each weight matrix $W_{i,j}$ is defined by $R^{\{i,j,3,3,k,k*\}}$.

In the example of Figure 2, each PE for example receives the activation states for the neighboring PEs that share a border or corner with the PE in question. Thus, each PE receives the activation states from up to eight neighboring PEs, in addition to storing its own activation state. An example is shown for the processing element $PE_{5,3}$, which receives the activation states of the processing elements at positions x,y with respect to the position of the processing element $PE_{5,3}$, where x and y are each integers from -1 to +1. Thus, the weight matrix $W_{5,3}$ associated with the processing element $PE_{5,3}$ for example defines weights applied to the activation states of each of diagonally shaded PEs, including the $PE_{5,3}$ itself.

In the case of PEs that are at an edge or corner of the array, the weight matrix is for example of reduced dimensions to only cover the PEs that are present, or it is filled with zeros for the PEs that are not present in the array. It would equally be possible for the PEs to be programmed with an ignore flag such that they ignore processing steps to be performed on data from PEs that are not present. As a further possibility, a ring of dummy PEs is provided around the array, these dummy PEs supply activation states set at zero and propagate activation states received from neighboring PEs.

Of course, the example dimensions of the weight matrix $W_{i,j}$ as described above and illustrated in Figure 2 is merely one example, and in alternative embodiments, other combinations would be possible. For example, the weight matrix $W_{i,j}$ of each PE could define that, for a given PE, the activation states are only received from the neighboring PEs sharing a border with that PE. As a further example, the weight matrix $W_{i,j}$ of each PE could define that, for a given PE, the activation states are received from all the neighboring PEs sharing a border or corner with the given PE, and from all the PEs sharing a border with a PE that itself shares a boarder or corner with the given PE.

Each PE of Figure 2 is for example configured to implement each layer of the DLM neural network by updating the activation state $h_{L-1,i,j}$ to a new value $h_{L,i,j}$, which is then processed by the next layer L. For example, each PE is configured to apply the following operation:

[Math 1]

$$h_{L,i,j} = f\left(\sum_{y=-1}^{+1}\sum_{x=-1}^{+1} h_{L-1,i+y,j+x} \cdot W_{L,i,j,y,x}\right)$$

where f() is the activation function.

Figure 3 schematically illustrates the weight matrix $W_{5,3}$ associated with and stored by the processing element $PE_{5,3}$ of Figure 2 according to an example embodiment in which each PE implements four neurons, and thus k=4.

The weight matrix $W_{5,3}$ for example comprises nine weight sub-matrices, $W_{5,3,x,y}$, for $x$ E **[-1,0,1]** and $y$ E **[-1,0,1]**. In other words, the weight matrix is defined by $R^{\{i,j,3,3,k,k*\}}$, the nine submatrices being in a 3 by 3 array.

Each of the processing elements of Figure 2 is for example associated with and stores a similar weight matrix to the matrix $W_{5,3}$, although in the case of PEs at borders or corners of the array, the sub-matrices that are not present in the array are for example at zero. In some embodiments, each of the weight matrices $W_{i,j}$ is different from each other weight matrices. Alternatively, some or all of the weight matrices $W_{i,j}$ could be the same, in other words all of the PEs stores the same set of weights, with the possible exception of the border/corner cases. Alternatively, the weight matrices are the same for given regions of the array, such as quadrants or concentric rings centered around the origin, such as the center of the PE array, where each region corresponds for example to a given region in the image plane.

Each weight sub-matrix is for example of dimensions k by k*, where k* denotes the number of neurons in each PE, i.e., the size of each neuron activation vector $h_{i,j}$, in the next layer of the neural network. Thus, each weight sub-matrix permits the generation of k* activation states based on the k input activation states from the corresponding PE. In the example of Figure 3, k*=k, meaning that there is a same number of neurons in the layer associated with the weight matrix as in the subsequent layer.

There is for example a weight matrix defined for each layer of the neural network that is implemented by the PE array. Alternatively, at least some of the layers may have the same number of neurons and have a same weight matrix, thereby reducing the number of weight matrixes to be stored by each PE.

While the example of Figure 3 is based on a weights matrix comprising a corresponding scalar weight value applied by each PE between each of the k input neurons and each of the k* output neurons, in alternative embodiments, the PE array 200 of Figure 2 could be adapted to implement a 2D convolutional network. In such a case, a convolution lateral mixing cab be applied, in which the activation state $h_{L,i,j}$ of each PE is no longer a 1-diminsional vector, but rather a 2D feature map, and each weight matrix $W_{i,j}$ is no longer a 3 by 3 array of weight sub-matrices of dimensions k by k*, but a 3 by 3 matrix of convolution kernels. Furthermore, each PE is for example configured to apply the following operation:

[Math 2]

$$h_{L,i,j} = f\left(\sum_{y=-1}^{+1}\sum_{x=-1}^{+1} h_{L-1,i+y,j+x} * W_{L,i,j,y,x}\right)$$

where f() is the activation function, and the operator (*) is a convolution operator.

The amount of padding and the stride applied during the convolution operation are for example chosen depending on whether the feature map size is to be increased, reduced, or preserved, from one layer to the next. As known by those skilled in the art, the padding corresponds to a thickness of pixels, with states set to zero, that are added around the boundary of each feature map to which the convolution is applied. The stride corresponds to the step size applied between the input feature map and the kernel. A padding of 1 and a stride of 1 for example result in preserving the size of the feature map. A stride of 2 and a padding of 1 will diminish the size of the feature map by 4 times.

Figure 4 schematically illustrates forward lateral mixing in a deep lateral mixer (DLM) neural network implemented using an array of processing elements PE according to an example embodiment of the present disclosure.

The array of processing elements has dimensions four by four in the example of Figure 4, and each processing element implements four neurons.

An input layer 400 of the DLM neural network comprises input data in the form of an image in the example of Figure 4, although other types of input data would be possible in alternative embodiments. Furthermore, in the example of Figure 4, the input layer 400 is a square image of 12 by 12 pixels, although in alternative embodiments input images having different dimensions would be possible. The input data is for example an image divided into macropixels (MACROPIXELS), the number of macropixels being equal to the number of PEs in the PE array such that each PE processes the pixel data and intermediate activation vectors of one macropixel.

The DLM neural network according to the example of Figure 4 comprises three hidden layers 401, 402 and 403 in addition to the input layer 100. In alternative embodiments it would be possible to have any number of hidden layers. While in Figure 4 each of the layers 401, 402 and 403 is represented by a separate array of processing elements PE, this is only for illustrative purposes in order to represent the lateral mixing steps, as in fact these layers are all implemented using a same single array of processing elements PE.

A first layer 401 of the DLM neural network is for example configured to diminish the size of the input vector associated with each PE down to $k_1$, which is the number of neurons implemented by each PE in the first hidden layer 401. The extent of reduction is controlled by the shape of weight matrix. Thus, each PE applies a weight matrix to a rectangular group of input pixels, wherein each weight matrix has dimensions $k_{input} \times k_1$, where $k_{input}$ is the number of input pixels processed by each processing element PE, corresponding for example to a macropixel of the image. In the example of Figure 4, $k_{input}$=9, and k=4, and each weight matrix thus has dimensions of 9x4. Each of the weight matrices of the first layer 401 in the example of Figure 4 thus reduces the 9 input pixels per PE into a hidden vector of 4. The weights of each weight matrix can for example be learned.

Alternatively, rather than reducing the size of the input in this way, a convolution operation can for example be used to reduce the size, for example by choosing a stride greater than 1. This has the advantage of involving fewer weights. For example, for a 3x3 input and a desired size of k1=4, a 2x2 convolutional kernel is passed with no padding and a stride of 1 to obtain a 2x2 feature map, i.e. a 4-size vector. If the input were much larger, a convolution with a stride of more than 1, and/or a series of convolutions, could be applied. The weights of the kernel used for convolution can for example be learned. Furthermore, the convolution operation can be a convolutional lateral mixing operation.

It will be noted that, in the example of Figure 4, lateral mixing is not performed between the input layer 400 and the first layer 401. Thus, each weight matrix stored by the PEs in association with the layer 401 does not, for example, comprise sub-matrices associated with any neighboring PEs. This is because such a weight matrix that performs both size diminishing and lateral mixing would have relatively large dimensions. However, it would also be possible to perform lateral mixing in the first layer as described in relation with Figure 3 if the memory of each PE is sufficient in size, or if convolutional lateral mixing is performed, as mentioned above.

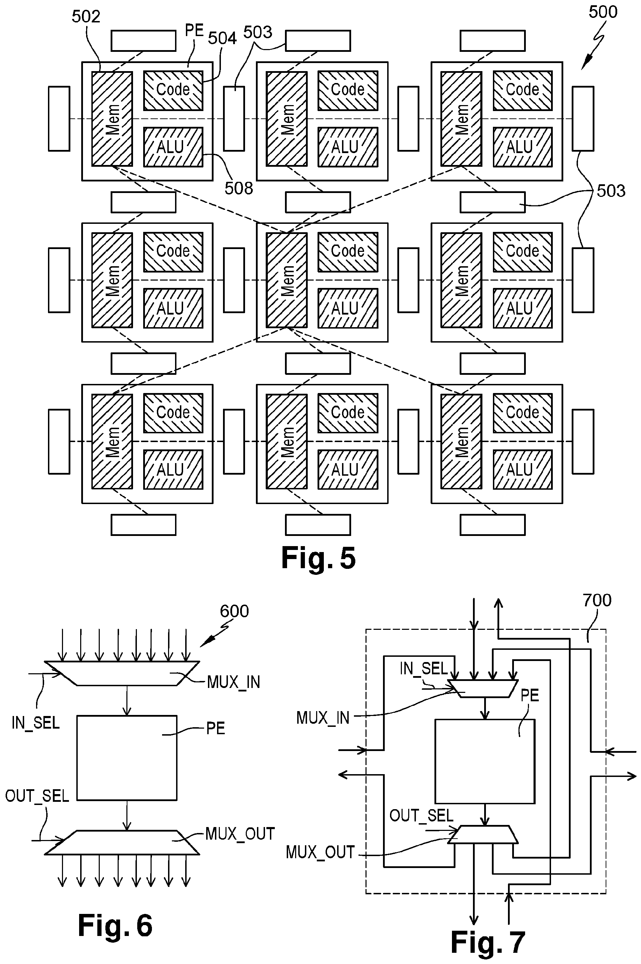

Figure 5 schematically illustrates a 3-by-3 array 500 of processing elements in more detail according to an example embodiment of the present disclosure. The array 500 of only nine processing elements is represented for ease of illustration, and in alternative embodiments the array is larger, for example having dimensions of I by J processing elements, where I and J can be each be up to several hundred or more. Furthermore, the array need not be square, but could have rectangular dimensions with I not equal to J.

Each PE for example comprises a memory (Mem) 502 storing data. In some embodiments, the memory 502 is a volatile memory, such as an SRAM (static random-access memory) or a register file, formed for example of flip-flops. The memory 502 is for example split into sections of different sizes that contain data variables, as will be described in more detail below. Data can be written into the memory 502 directly by a sensor if present (not illustrated in Figure 5), and/or by an on-chip memory that is located outside the PE array, and/or by neighboring PEs via interface circuits 503, for example one or more multiplexers, positioned between the PEs.

Each PE also for example comprises a processor (ALU) 508, such as an arithmetic logic unit (ALU), configured to address data in the memory 502, to perform calculations on the data, such as, for example, multiply, add, and bit-shift operations, and to write results back into the memory 502 at desired locations. The manner in which data in the memory 502 is managed and what sequence of operations the processor 508 performs on this data is defined, for example, by computer instructions forming a computer code, also referred to as a microcode, stored in a code memory (Code) 504. In some embodiments, the code memory 504 is implemented by a separate memory circuit to the one implementing the memory 502, although it would also be possible for the memories 502 and 504 to be implemented by a same memory circuit. Like the memory 502, the memory 504 is for example implemented by a volatile memory. In order to keep the area footprint of each PE relatively low, the code memory 504 is for example relatively constrained in size and thus limited in the number of instructions it can store. Therefore, in some embodiments, several codes may be loaded and run in sequence in order to achieve the desired operation of the neural network. For example, the PE array 500 is positioned adjacent to a larger memory circuit and a global controller (not illustrated), which allows data to be written into and read from the local memory circuits 502 and local code memories 504 of each PE. It would also be possible, in some embodiments, for the code memory 504 to be implemented by a non-volatile memory, such as a Flash

7

memory or EEPROM (Electrically Erasable Programmable Read-Only Memory).

In some embodiments, the code executed by each PE is the same, such that each PE of the PE array performs the same operations synchronously with each other.

While Figure 5 is based on a software implementation of each PE, a hardware implementation would also be possible. In such a case, the code memory 504 and processor 508 are for example replaced by a single dedicated circuit block configured to repeat pre-defined operations on the data stored by the memory 502, such as multiply and accumulate operations that can be parameterized.

The interface circuits 503 of the PE array 500 for example permit data from the memory 502 of each PE to be shared with the neighboring PEs. Examples of the implementation of these interfaces will now be described with reference to Figures 6 and 7.

Figure 6 schematically illustrates a PE module 600 comprising a processing element and input/output multiplexers MUX_IN, MUX_OUT, according to an example embodiment. This module 600 is for example used to implement each PE and the corresponding multiplexers of Figure 5. In the example of the module 600 of Figure 6, the input multiplexer MUX_IN has eight inputs, one being coupled to the memory 502 of each of the eight neighboring PEs, for example via the output multiplexer MUX_OUT of each neighboring PE module. The output of the input multiplexer MUX_IN is coupled to the PE, and in particular to the memory 502 of the PE. The multiplexer MUX_IN is controlled by a selection signal IN_SEL, generated for example by the processor 508 of the PE. The output multiplexer MUX_OUT of the module 600 for example has an input coupled to the PE, and in particular to the memory 502 of the PE, and eight outputs, one being coupled to the memory 502 of each of the eight neighboring PEs, for example via the input multiplexer MUX_IN of each neighboring PE module. The multiplexer MUX_OUT is controlled by a selection signal OUT_SEL, generated for example by the processor 508 of the PE.

Figure 7 schematically illustrates a PE module 700 comprising a processing element and input/output multiplexers MUX_IN, MUX_OUT, according to another example embodiment. This module 700 is for example used to implement each PE and the corresponding multiplexers of Figure 5. In the example of the module 700 of Figure 7, the input multiplexer MUX_IN has four inputs, one being coupled to the memory 502 of each neighboring PE that is horizontally or vertically adjacent in the array, for example via the output multiplexer MUX_OUT of each corresponding neighboring PE module. The output of the input multiplexer MUX_IN is coupled to the PE, and in particular to the memory 502 of the PE. The multiplexer MUX_IN is controlled by a selection signal IN_SEL, generated for example by the processor 508 of the PE. The output multiplexer MUX_OUT of the module 600 for example has an input coupled to the PE, and in particular to the memory 502 of the PE, and four outputs, one being coupled to the memory 502 of each of the eight neighboring PEs, for example via the input multiplexer MUX_IN of each neighboring PE module. The multiplexer MUX_OUT is controlled by a selection signal OUT_SEL, generated for example by the processor 508 of the PE.

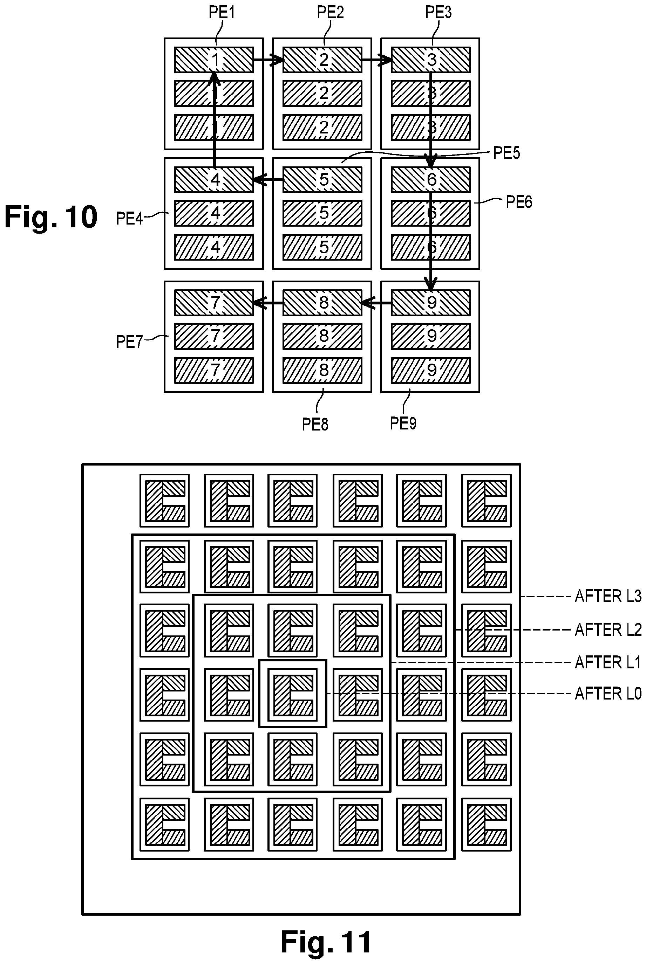

During the lateral mixing operation, each PE performs, in parallel, an operation on its activation states and the activation state on each of its neighboring PEs. The PE module 600 of Figure 6 permits the activation state to be supplied to the PE from any of the eight neighboring PEs and from the PE to any of the eight neighboring PEs. The PE module 700 of Figure 7 permits the activation state to be supplied to the PE from any of the four horizontally or vertically adjacent PEs and from the PE to any of the four horizontally or vertically adjacent PEs. This still permits a given PE to obtain the activation state of its eight neighbors by using a specific shift sequence, as will be described in more detail below with reference to Figure 10.

While not illustrated in Figures 6 and 7, in some embodiments a further circuit interface is provided, for example on either side of the multiplexers, configured to select which section of the PE memory 502 is written with data from a neighboring PE, and/or is read for transmission to a neighboring PE. For example, in some cases, the data may be read and written from one memory to another in chunks that are send over a plurality of cycles, and this further interface circuit selects the memory addresses where these chunks are read and written to.

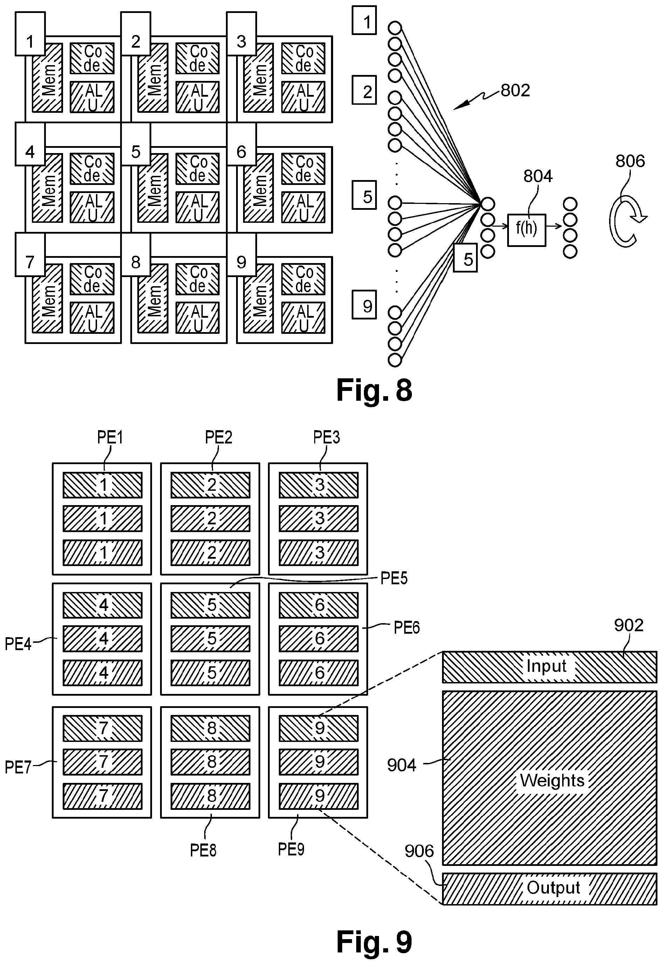

Figure 8 schematically represents a forward lateral mixing operation according to an example embodiment of the present disclosure.

The operation represented by Figure 8 is for example performed by each PE of an array of PEs, such as the arrays of Figures 2 or 5. Figure 8 illustrates a central PE 5, and its eight neighbors PE 1 to PE 4 and PE 6 to PE 9, and shows the operations implemented by the central PE. A similar operation is for example implemented by each PE of the array.

We assume that, as a first step, pixel data gathered at a given instant in time, such as a still image, or a frame of a video sequence, is written into a section of the memory of each PE. For example, as described above in relation with Figure 4, in the case that the input data is image data, the input image is for example divided into macropixels. In the case that each macropixel comprises 16x16 pixels, then the input data vector for the DLM neural network at each PE is for example a flattened 256-item vector, where each entry is a number corresponding to a sensed pixel intensity. To produce the first hidden state of the DLM neural network for each PE, this 256-length vector is for example multiplied by a 256xH weight matrix, for example by applying an inner-product or a vector-matrix multiplication. In this example, it is assumed that H=16, although different values would be possible. After this operation, each PE will have, in its local memory 502, a vector having a length of 16 values, referred to herein as the hidden state vector or activation state vector. Assuming that all of the values are quantized as 4-bit integers, except from the intermediate partial sums, this corresponds to a memory usage of 2.2 kB per PE for the execution of this first step.

One or more lateral mixing operations, corresponding to one or more hidden layers of the network, are then for example performed. During these operations, the PEs, iteratively over a certain number of lateral mixer layers, update their local hidden state via MAC (multiply and accumulate) operations with the activation states stored in their neighboring PEs. This exploits the capability of PEs to shift their memory contents, via multiplexers, between neighboring PEs, as described above with reference to Figures 6 and 7.

The lateral mixing operations for example involve the processing, by each PE, of three types of data stored in the local memory 502 of the PE, as will now be described in more detail with reference to Figure 9.

Figure 9 schematically illustrates memory portions of the array of processing elements PE 1 to PE 9 of Figure 8 according to an example embodiment of the present disclosure.

Each PE is illustrated as containing three memory portions, which for example correspond to three different sections of the local memory 502 within each PE.

A first input section (Input) 902 of each PE for example contains a hidden state vector of the PE. In some embodiments, the input section 902 initially stores the hidden state vector for the PE itself, and this value is then overwritten by the hidden state vectors shifted in from neighboring PEs. Alternatively, the input section 902 may comprise two sections, a first which stores the local hidden state of the PE, and a second which stored the hidden state shifted in from the neighboring PEs.

A second weights section (Weights) 904 of each PE for example contains the weights that will be multiplied with activation state vector of the PE and of the activation state vector of each of the neighboring PEs. These weights for example have dimensions of kxk*x9, and each weight is for example a scalar or a convolution kernel. In some cases, for each DLM layer, a new weight matrix is loaded into each PE from an external memory. In other embodiments, the same weight matrix is for example used for some or all of the hidden layers.

A third output section (Output) 906 stores the accumulated weighted sum as the algorithm sweeps through the MAC operations based on the activation state vector of the PE itself and of each of the eight neighboring PEs as well their corresponding weight matrices. After all of the weighted sums have been accumulated, a non-linear activation function can be applied to this value and the result written into the section Input, which serves as the activation vector that is used for the next DLM layer.

With reference again to Figure 8, all of the PEs are for example configured to shift their activation state vector, for example corresponding to the input section 902 of their local memory 502, at the same time in the same direction, such that this transfer happens in parallel over the full PE array. The shifting operation is for example coordinated by a global clock for the whole PE array, such that the PEs operate synchronously. Assuming a hidden layer size of 16 values, this for example uses a 9x16x16 weight matrix per layer. Assuming a 4-bit quantization, this corresponds to a memory usage of 1.2 kB in the local PE memory per layer, or in the case that the same weight matrix is shared between all of the layers, a memory usage of 1.2 kB for all of the layers.

The generation of one set of the partial products is represented in Figure 8 by links between the four neurons of a central PE 5 and a first neuron of the PE 5, and by links between the four neurons of each neighboring PE 1 to PE 4 and PE 6 to PE 9 with the first neuron of the PE 5. At each neuron, the set of multiplications are accumulated, in other words the result of the current multiplication is summed with the result of all previous multiplication, and stored in an "output" section of the local PE memory 502.

As represented by a block 804 in Figure 8, after the final weighted sum has been obtained, the PE can apply locally a non-linear activation function f(h), such as for example a ReLU, tanh or sigmoid function, to obtain the new activation state vector that is written into the input section 902 of the local PE memory 502, for example overwriting the value currently held there, which is the activation state vector of the final neighboring PE that was shifted-in. Between layers, this vector may also undergo a normalization function such as batch normalization, instance normalization or layer normalization, as is commonly practiced in neural networks.

As represented by a repeat symbol 806 in Figure 8, the same sequence of operations is for example repeated for a desired number of lateral mixing layers, without any pre-processing or data reorganization between layers, and in some cases, without the loading of new instruction codes to be code memory 504 of each PE. All activation data is in the correct location to be used in the next layer, which is typically not the case for systolic array implementations of existing neural network models. It can be noted that all PEs over the entire array perform the same shifting and MAC operations in parallel. Furthermore, in some embodiments, all PEs execute the same code using a same common clock signal (not illustrated), implying that there is no need for a synchronization protocol when shifting the activation state vectors between the PEs.

Figure 10 schematically illustrates an expanding spiral shift sequence between local memories in the array of processing elements PE 1 to PE 9 of Figure 8 during forward lateral mixing according to an example embodiment of the present disclosure. This shift sequence for example permits, over a sequence of eight shift operations, for the activation state vector of the central processing element PE 5 of the array to be communicated to each of its eight neighbors. As represented by arrows in Figure 10, the sequence starts at the PE 5, and involves an expanding spiral shift sequence L, U, R, R, D, D, L, L, where L is a left shift, U is an up shift, R is a right shift and D is a down shift. This means that the input section of the local memory 502 of the central processing element PE 5 contains, over nine iterations, the activation state vectors of the processing elements: PE 5, PE 6, PE 9, PE 8, PE 7, PE 4, PE 1, PE 2 and PE 3. Of course, Figure 10 illustrates merely one example of the shift sequence that can be applied, there being many alterative shift patterns, such as a raster sequence, in the case that the memory of each PE has a section that stores the hidden state vector of the PE itself throughout the layer processing.

It will be noted that for certain PEs in the array, they will receive activation state vectors that may have passed outside of the array before re-entering the array. This is for example rendered possible by padding the outside boundary of the array with dummy PEs that perform only the shifting operation. Alternatively, in the case that the memory of each PE has a section that stores the hidden state vector of the PE itself throughout the layer processing, then the original vector is never lost, and can be transferred.

In some embodiments, each of the PEs of the PE array is configured to perform, synchronously with the other PEs, a same sequence of operations, involving shifting in neuron data from a neighboring PE to the east, south, west or north of the PE depending on the shift sequence, to perform the same operation on the neuron data, and to shift out the neuron data to a neighboring PE to the east, south, west or north of the PE depending on the shift sequence. For example, this is implemented by loading a same instruction code into the local memory of each PE, and executing this same instruction code.

In the case that the DLM neural network has multiple hidden layers, each additional layer spatially increases the zone of influence of a given macropixel, as will now be described with reference to Figure 11.

Figure 11 schematically illustrates the radius of influence of a processing element $PE_{2,2}$ of a 6 by 6 PE array after one, two and three lateral mixer layers, according to an example in which the weight matrix has dimensions of 3 by 3 sub-matrices. It can be seen that, after the input layer 0 (AFTER L0), which does not in this example comprise any lateral mixing, the input data is present only in the processing element $PE_{2,2}$. After the first hidden layer (AFTER L1), the zone of influence covers a 3 by 3 group of PEs centered on the processing element $PE_{2,2}$, after the second hidden layer (AFTER L2) the zone of influence covers a 5 by 5 group of PEs centered on the processing element $PE_{2,2}$, and after the third hidden layer (AFTER L3) the zone of influence covers the entire 6 by 6 array of PEs.

Thus, during each layer, each PE will integrate information from further and further across the PE array as depicted in Figure 11. This permits each PE to produce a local embedding, corresponding to an abstract output vector representation of the input, that takes into account global features and context. In some embodiments, the number of lateral mixer layers is, for example, defined by the dimensions of the PE array and the number of layers that permit the full image to be spanned, which also depends on the resolution of each macropixel.

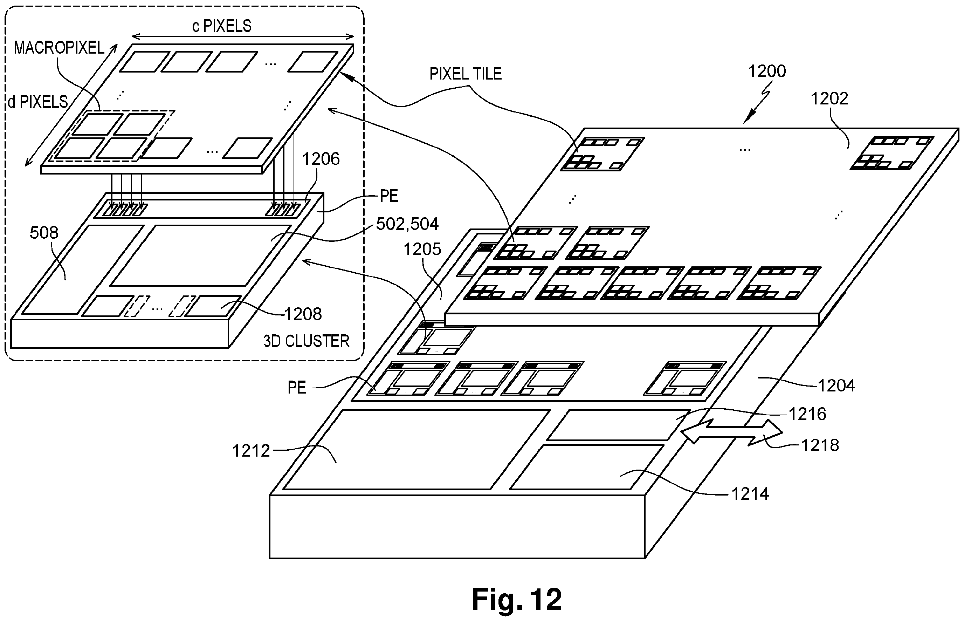

Figure 12 schematically illustrates an imaging device 1200 comprising an image sensor 1202 stacked on a data processing chip 1204, and in particular on a PE array 1205 of the processing chip 1204, according to an example embodiment of the present disclosure. The PE array 1205 is for example a systolic array implementing the DLM neural network as described herein.

The image sensor 1202 for example comprises an array of pixel tiles (PIXEL TILE), each for example comprising a sub-array of c pixels (c PIXELS) by d pixels (d PIXELS), where c and d are equal to 16 in the example of Figure 12. Each pixel for example comprises a photodetector. The image sensor 1202 also for example comprises analog to digital converters (not illustrated) for converting analog signals captured by each pixel into digital values that can be processed by the data processing chip 1204 using in-sensor processing.

Each pixel tile for example forms a top tile, and is positioned over a corresponding bottom tile of the data processing chip forming a processing element (PE) of the PE array 1205, each pair of top and bottom tiles for example forming a 3D cluster (3D CLUSTER). Each PE for example comprises E calculation elements 1208, where E is equal to 16 in the example of Figure 12. Each of the calculation elements for example processes one row of pixel data from a corresponding macropixel (MACROPIXEL) formed of p pixels of the pixel tile, where p is equal to 4 in the example of Figure 12.

Each pixel tile is for example coupled to the corresponding bottom tile by interconnection vias, also referred to as 3D vias. Each bottom tile for example additionally comprises the local data/code memory 502, 504 and the local processor 508. Additionally, the PE for example comprises one or more additional processing circuits 1208 used for example for adding parallelism within each PE, allowing for example a row of pixels or activation vectors to be processed at the same time.

The processing chip 1204 also for example comprises, for example adjacent to the PE array 1205, a data memory 1212, an instruction memory 1214 and a global control circuit 1216 of the imaging device. The global control circuit 1216 is for example configured to supply a data stream 1218 from the imaging device 1200 comprising, for example, image data captured by the image sensor and inference data generated by the DLM neural network implemented by the processing matrix.

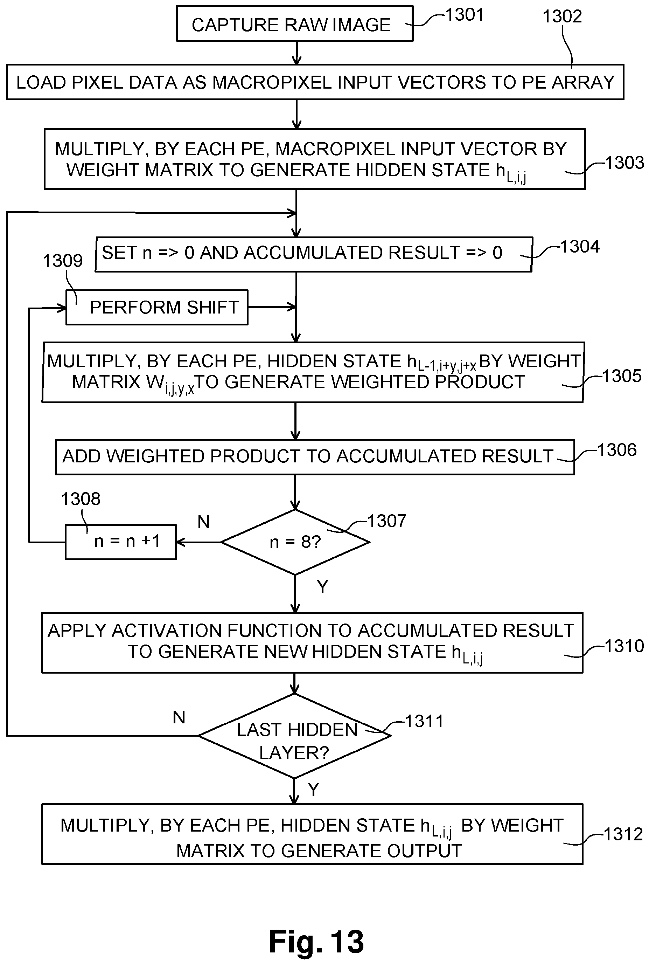

Figure 13 is a flow diagram illustrating operations in a method of inference involving forward lateral mixing according to an example embodiment of the present disclosure. The method of Figure 13 is for example implemented by an array of processing elements as described herein, such as by the processing matrix 1205 of Figure 12, and by an image sensor.

In an operation 1301, a raw image is captured by an image sensor. The raw image may be a grey-scale image or color image. In some embodiments, like the one of Figure 12, the image sensor and processing matrix are part of a same imaging device, while in other embodiments the image sensor may be a separate component. It is assumed that the image sensor captures grey-scale images, in other words raw pixel intensity, but the top sensing layer could also co-locate photodetectors sensitive to different wavelengths of light and produce color images composed of a certain number of color channels, such as RGB images. Furthermore, the raw image is converted by analog to digital converters in the image sensor, into a digital raw image.

In an operation 1302 after the operation 1301, the digital pixel data of the raw image is loaded as macropixel input vectors to the PE array. For example, each PE of the array receives the pixel data from a corresponding macropixel. This data is for example stored to the input section of the local memory 502 of each PE.

In an operation 1303 after the operation 1302, each $PE_{i,j}$ of the PE array is configured to multiply the corresponding macropixel input vector by a corresponding weight matrix in order to generate an initial hidden state $h_{L,i,j}$. As described above, this input layer operation does not necessarily, for example, involve lateral mixing, but for example serves primarily to diminish the size of the macropixel input vectors.

In an operation 1304 after the operation 1303, variables "n" and "ACCUMULATED RESULT" are for example each set to 0.

In an operation 1305 after the operation 1304, for a subsequent layer L, each $PE_{i,j}$ of the PE array is for example configured to multiply the hidden state $h_{L-1,i+y,j+x}$ by a corresponding weight matrix $W_{i,j,y,x}$ to generate a weighted product. For example, x and y are parameters indicated in Figure 3, and on each iteration, the hidden state $h_{L-1,i+y,j+x}$ from a different one among the nine hidden states to be processed by each PE is processed. For example, in the first iteration, the hidden state $h_{L-1,i+0,j+0}$ of the PE itself is processed.

In an operation 1306 after the operation 1305, the weighted product generated in operation 1305 is added to the current accumulated result in order to generate a new accumulated result.

In an operation 1307 after the operation 1306, it is determined whether n=8, which is the number of iterations to be performed in the case that each weight sub-matrix is of dimensions 3 by 3. In not (branch N), in an operation 1308, n is incremented, and an operation 1309 is performed. In operation 1309, a shift is for example performed in order to transfer to the PE a next hidden state to be processed, which is a hidden state from one of the neighboring PEs. The operations 1305 to 1307 are then for example repeated as described above, but based on the hidden state shifted in from the neighboring PE. For example, according to the shift sequence of Figure 10, after processing the hidden state $h_{L,i,j}$ of the PE itself, the hidden states of the eight neighboring PEs are processed in the order $h_{L,i+1,j+0}$, $h_{L,i+1,j+1}$, $h_{L,i+0,j+1}$, $h_{L,i-1,j+1}$, $h_{L,i-1,j+0}$, $h_{L,i-1,j-1}$, $h_{L,i+0,j-1}$, $h_{L,i+1,j-1}$.

When, in operation 1307, n=8 (branch Y), this means that the accumulated result is equal to the sum $a_{L,i,j}$ of all of the weighted products (nine products in the present example), and in an operation 1310, an activation function f() is applied to the accumulated result in order to generate a new hidden state $h_{L,i,j}$ of the processing element $PE_{i,j}$.

In an operation 1311 after operation 1310, it is determined whether the hidden layer currently being processed is the last, or whether there are additional hidden layers to be processed. If it is not the last (branch N), the operations 1304 to 1311 are for example repeated for the next layer L based on the new hidden state $h_{L,i,j}$ generated in operation 1310, and based on a weight matrix $W_{i,j}$ associated with the next hidden layer, unless the same weight matrix is to be applied.

When, in operation 1311, there are no more hidden layers to be applied, in an operation 1312, an output layer is for example applied. This for example involves multiplying, by each processing element $PE_{i,j}$, the hidden state $h_{L,i,j}$ resulting from the hidden layers by a further weight matrix. As for the input layer, it is possible to implement the output layer with or without lateral mixing. For example, if the task of interest is a binary segmentation for a region of interest (ROI) proposal, each PE is for example configured to output either a single value (PE-coarse segmentation) or a matrix of values that, for example, correspond to the size of marcopixel (PE-fine segmentation). Assuming an application involving a PE-coarse ROI-proposal, each PE is for example configured to output a value between 0 and 1 that indicates the probability that this PE is superimposed over a region of interest in the full field of view. Therefore, a weight matrix of either 9xNx1 or Nx1 is for example applied by each PE with and without lateral mixing respectively. Since, for this task, the weight matrix is relatively small, it may well be desired to perform lateral mixing in the output layer. In contrast, for a "PE-fine" ROI-proposal where, for an input macropixel resolution of 16x16, the weight matrix would be either 9xNx256 or Nx256, where 256 corresponds to the flattened square patch, it may be more economic to not perform lateral mixing in the output layer. For a task involving PE-coarse ROI-proposal, with output lateral mixing, the weight matrix for example occupies 72 bytes of memory. The full DLM, assuming an individual weight matrix for each layer and a total of 5 layers for a 16x12 array of PEs for example uses 1.2 MB of memory across the entire PE array. If using shared hidden layer weights, this drops to 230 kB for all PE.

An example of the full algorithm is summarized in pseudo-code in Algorithm 1 below. This example is based on the particular spiral shifting strategy described in relation with Figure 10, whereas other shifting strategies could be used. Algorithm 1 describes in particular the operations that are executed simultaneously on all PE, wherein w_in is the weight matrix applied at the input layer, B_in is a bias to be applied at the input layer, which may equal zero, w_h is the weight matrix applied to a current hidden layer comprising sub-matrices w_h[0] to w_h[8], B_h is a bias to be applied to the current hidden layer, and h[0] is the hidden state of the PE itself, and h[1] to h[8] are the hidden states of the eight neighboring PEs. Indeed, each layer may make use of a bias parameter such that, instead of being initialized as a vector of zeros for each layer, the accumulated weighted sum in each hidden layer neuron is initialized with a value that has been learnt value.

```
Algorithm 1 - One inference using a DLM

Capture input macropixel X

h = X*w_in + B_in

For each DLM layer

        If weights not shared between layers

                Load w_h, B_h from local memory

        If using bias

                O = B_h

        Else

                O = zeros

        O = O + h*w_h[0]

        Shift h 1 to LEFT

        O = O + h*w_h[1]

        Shift h 1 to UP

        O = O + h*w_h[2]

        Shift h 1 to RIGHT

        O = O + h*w_h[3]

        Shift h 1 to RIGHT

        O = O + h*w_h[4]

        Shift h 1 to DOWN
```

```
O = O + h*w_h[5]

Shift h 1 to DOWN

O = O + h*w_h[6]

Shift h 1 to LEFT

O = O + h*w_h[7]

Shift h 1 to LEFT

O = O + h*w_h[8]

h = f(O)
```

As know by those skilled in the art, the weight matrices of a neural network can be learned using a standard backpropagation algorithm, and this applies equally to the weight matrices of the DLM neural network described herein. Furthermore, if desired, bias values as described above can also be learned.

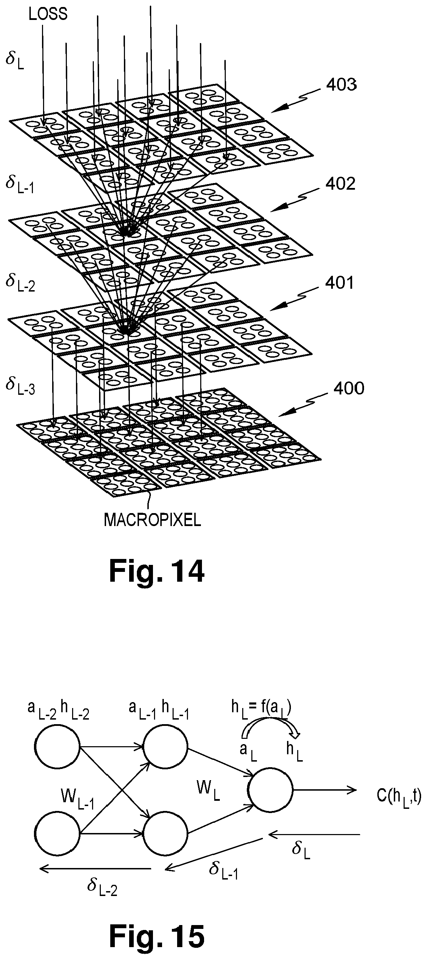

In some cases, the backpropagation algorithm itself may also make use of lateral mixing, as will now be described in more detail with reference to Figures 14 to 18.

Figure 14 schematically illustrates reverse lateral mixing using an array of processing elements according to an example embodiment of the present disclosure.

Figure 14 illustrates the same DLM neural network layers 400 to 403 as Figure 4, but illustrates how lateral mixing can be applied to on-chip learning. Conceptually, this is equivalent to calculating the gradient of a loss (LOSS) at the output layer, or after the output layer by aggregation, and reversing the operations that were performed such that the gradient flows back through all intermediate PE back to where the initial data was input into the PE array.

In Figure 14, the arrows indicate the flow of the information back through the lateral mixer layers from the output to the input. This involves, for each layer from the output layer L to the input layer L-3, the calculation of a corresponding error signal $\delta_L$ to $\delta_{L-3}$, as will now be described with reference to Figure 15.

Figure 15 schematically illustrates a backpropagation operation according to an example embodiment of the present disclosure in the case of a simple neural network having two hidden layers L-2 and L-1, and an output layer L. During forward propagation, the weighted sums of the inputs to each layer are labelled $a_{L-2}$, $a_{L-1}$ and $a_L$, the hidden states resulting from each layer are labelled $h_{L-2}$, $h_{L-1}$ and $h_L$, the weight matrices applied at the inputs of the layers L-1 and L are labelled $W_{L-1}$ and $W_L$, and the activation function applied to the neuron in the output layer in order to generate the output state $h_L$ is $f(a_L)$.

A loss associated with the output state $h_L$ is labelled $C(h_L,t)$. The gradient for a layer of weights in a layer 1 of the network is:

[Math 3]

$$\frac{dC}{dW_l} = \delta_l \cdot h_{l-1}^T$$

where $\delta_l$ is an error signal that either comes from the loss in the output layer, or from the next layer in front for all other layers.

In the output layer L, the value of delta is:

[Math 4]

$$\delta_L = C'(h_L, t) \circ f'(a_L)$$

and for all other layers, the value of delta is:

[Math 5]

$$\delta_{L-1} = W_L \delta_L \circ f'(a_{L-1})$$

where $\circ$ is the hadamard, or element-wise, product.

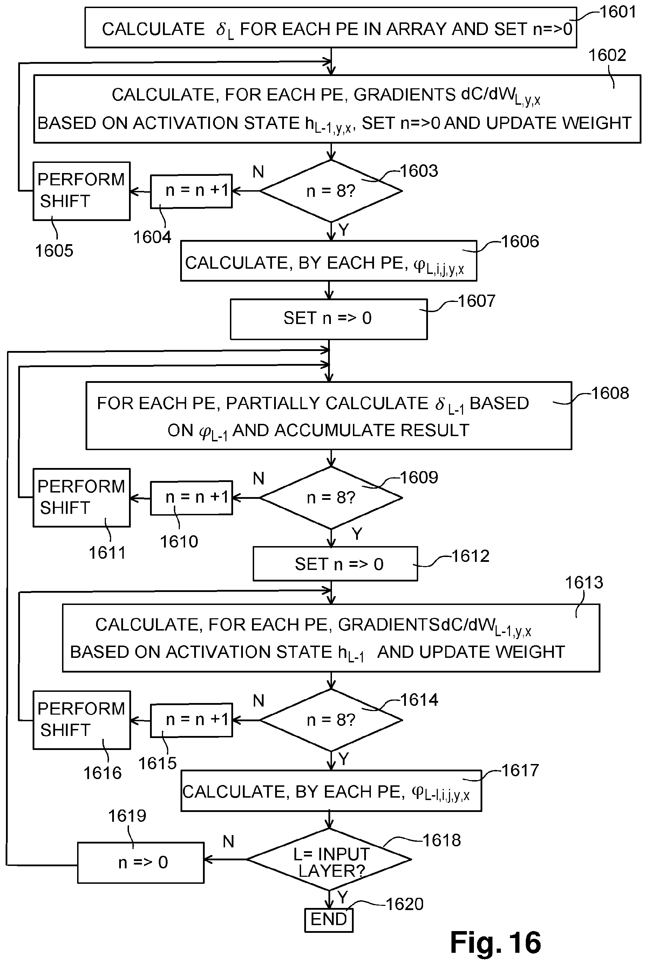

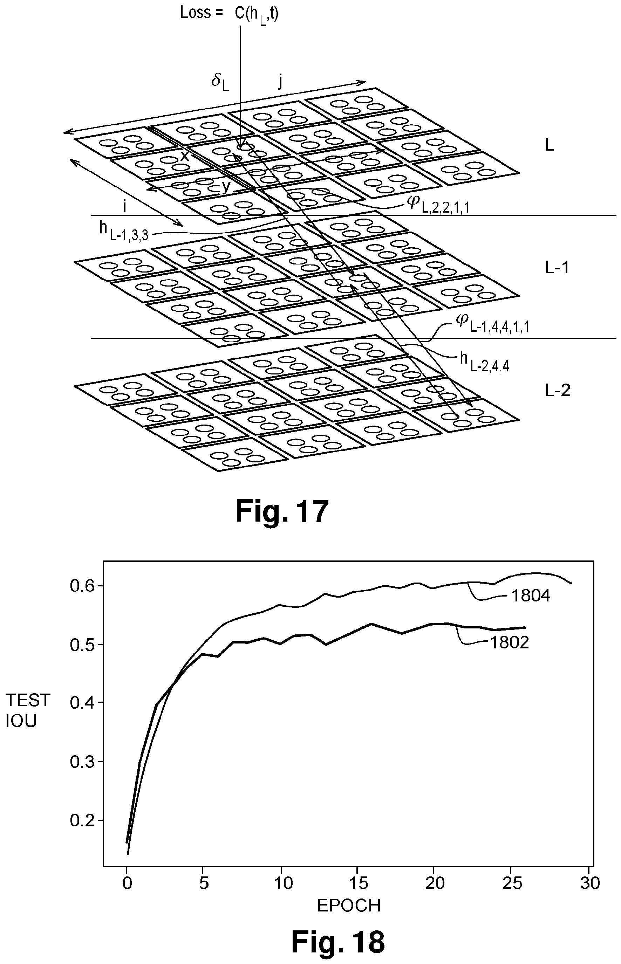

Figure 16 is a flow diagram illustrating operations in a method of training a DLM neural network, according to an example embodiment of the present disclosure. This method involves reverse lateral mixing. The method of Figure 16 is for example implemented by an array of processing elements as described herein, such as by the processing matrix 1205 of Figure 12. Figure 16 will be described also with reference to Figure 17.

Figure 17 schematically illustrates backpropagation operations of several layers L, L-1 and L-2 in a PE array according to an example embodiment of the present disclosure.

Referring to Figure 16, in an operation 1601, the value $\delta_L$ is calculated for each PE in the array. For example, this value is calculated using the following equation:

[Math 6]

$$\delta_L = C'(h_L, t) \circ f'(a_L)$$

where $C'(h_L,t)$ is the derivative of the loss $C(h_L,t)$.

As represented in Figure 17, the value $\delta_L$ for a given PE is based on the loss $C(h_L,t)$ associated with this PE, which is based on the activation state $h_L$.

Also in operation 1601, a variable n is for example set equal to 0.

In an operation 1602 after operation 1601, local weight gradients are calculated for each PE. For a given PE, this involves calculating the local weight gradients for each of the nine weight sub-matrices of the given PE using the activation states from the layer L-1. For example, each gradient is calculated for a PE based on the following equation:

[Math 7]

$$\frac{dC}{dW_{L,i,j,y,x}} = \delta_L \cdot h^T_{L-1,i+y,j+x}$$

for x 6 [-1,0,1] and *y* 6 [-1,0,1].

This uses the activation states of the neighbors and on the PE itself from the previous layer, which are either still stored locally from the forward pass in each PE, or alternatively loaded in from an external memory, depending for example on the PE memory capacity. For example, as represented in Figure 17, the activation $h_{L-1,3,3}$ is used at the processing element $PE_{2,2}$ during one iteration. The activation states of neighboring PEs of a given PE are for example supplied to that PE over a number of iterations, as described in relations with Figures 5 to 10 above, involving operations 1603, 1604, 1605 and a repetition of operation 1602.

In the operation 1603, it is for example determined whether the parameter n is equal to 8, which is the number of neighboring PEs from which the activation state is to be received. If not (branch N), in the operation 1604 n is incremented, and then in an operation 1605, a shift is performed in order to shift in the activation state from one of the eight neighbors. The operation 1602 is then repeated based on the new activation state, and operations 1603 to 1605 are repeated. This loop is repeated until the activation states of all of the neighboring PEs, as well as the PE itself, have been processed and used to generated the corresponding gradients.

Following the generation of each gradient in operation 1602, the corresponding weight in the weight matrix is for example updated, for example based on the following equation:

[Math 8]

$$W_{L,i,j,y,x} = W_{L,i,j,y,x} - \frac{dC}{dW_{L,i,j,y,x}} * \eta$$

where $\eta$ is a learning rate. In some embodiments, this involves loading the sub-weight matrices from each of the layers from the on-chip memory, such as the memory 1212 of Figure 12.

Once n has reached 8 in operation 1603, in a subsequent operation 1606, each PE is configured to generate in each PE a matrix phi, $R^{\{i,j,3,3,k\}}$, which is a set of nine vectors, e.g. a 3x3 matrix of vectors - one for each of the weight sub-matrices on each PE for each layer. Phi corresponds to an error signal that is used by neighboring PE to calculate the delta signal in the previous layer $\delta_{L-1,i,j}$. Phi is for example calculated based on the following equation:

[Math 9]

$$\varphi_{L,i,j,y,x} = W_{L,i,j,y,x} \cdot \delta_{L,i,j}$$

As represented in Figure 17, the parameters $\varphi_{L,i,j,y,x}$ are calculated locally for a current layer L and then used in the layer $L - 1$ to calculate the delta vector for each PE. Figure 17 illustrates an example for the parameter $\varphi_{L,2,2,1,1}$ for the PE at i=2, j=2, which is used in the layer L - 1 by the PE i=3, j=3.

After operation 1606, processing passes to the next layer, and in an operation 1607, the parameter n is for example set to zero again.

After the operation 1607, a series of operation 1608, 1609, 1610 and 1611 are repeated, by each PE in the array, over several iterations in order to generate the value $\delta_{L-1}$. For example, the value $\delta_{L-1,i,j}$ is calculated using the following equation:

[Math 10]

$$\delta_{L-1,i,j} = f'(a_{L-1,i,j}) \circ \sum_{y=-1}^{+1} \sum_{x=-1}^{+1} \varphi_{L,i+y,j+x,-y,-x}$$

This implies summing a set of nine different variables of $\varphi_L$ from the neighboring PEs determined in operation 1606 of the next layer in the weight matrix for the PE i,j with each of its eight neighbors in i and j.

The values of $\varphi$ from neighboring PEs of a given PE that are used to generate $\delta_{L-1,i,j}$ are for example shifted in to that PE over a number of iterations, as described in relations with Figures 5 to 10 above. For example, in the operation 1609, it is determined whether the parameter n is equal to 8, which is the number of neighboring PEs from which values $\varphi$ are to be received. If not (branch N), in the operation 1610, n is incremented, and then in an operation 1611, a shift is performed in order to shift in the values of $\varphi$ from one of the eight neighbors. The operation 1608 is then repeated based on the new values of $\varphi$ to partially generate a new part of the value $\delta_{L-1}$, this is accumulated with the previous partial value or values, and then operations 1609 to 1611 are repeated. This loop is repeated until the values of $\varphi$ from all of the neighboring PEs have been processed and the accumulated result is equal to $\delta_{L-1}$.

Once n has reached 8 in operation 1609, in a subsequent 1612, the variable n is for example set to zero again.

In an operation 1613 after operation 1609, local weight gradients are calculated for each PE. For a given PE, this involves calculating the local weight gradients for each of the nine weight sub-matrices of the given PE using the activation states from the layer L-1. For example, each gradient is calculated based on the following equation:

[Math 11]

$$\frac{dC}{dW_{L-1,i,j,y,x}} = \delta_{L-1,i,j} \cdot h_{L-l-1,i+y,j+x}^{T}$$

Like in operation 1602, this uses the activation states of the neighbors, which are still stored locally by each PE. For example, as represented in Figure 17, the activation $h_{L-2,4,4}$ is using at the processing element $PE_{3,3}$ of the layer L-1. The activation states of neighboring PEs of a given PE are for example supplied to that PE over a number of iterations, as described in relation to Figures 5 to 10 above, involving operations 1614, 1615, 1616 and a repetition of operation 1613.

In the operation 1614, it is for example determined whether the parameter n is equal to 8, which is the number of neighboring PEs from which the activation state is to be received. If not (branch N), in the operation 1615, n is incremented, and then in an operation 1616, a shift is performed in order to shift in the activation state from one of the eight neighbors. The operation 1613 is then repeated based on the new activation state, and operations 1614 to 1616 are repeated. This loop is repeated until the activation states of all of the neighboring PEs have been processed and used to generated the corresponding gradients.

Following the generation of each gradient in operation 1613, the corresponding weight in the weight matrix is for example updated as described in relation with operation 1602.

Once n has reached 8 in operation 1614, in a subsequent operation 1617, each PE is configured to generate in each PE the matrix phi $R^{\{i,j,3,3,k\}}$, which is a set of nine vectors, e.g. a 3x3 matrix of vectors - one for each of the weight sub-matrices on each PE for each layer. Phi is for example calculated based on the following equation:

[Math 12]

$$\varphi_{L,i,j,y,x} = W_{L,i,j,y,x} \cdot \delta_{L,i,j}$$

Figure 17 illustrates an example for the parameter $\varphi_{L\text{-}1,4,4,1,1}$, for the PE at i=3, j=3, which is used in the layer $L$ - 2 by the PE i=4, j=4.

In an operation 1618 after operation 1617, it is for example determined whether the current layer L is the input layer. If not (branch N), in an operation 1619, the variable n is set to zero, and then operations 1608 to 1617 are repeated based on the previous layer L.

When, in operation 1618, it is determined that the current layer L is the input layer (branch Y), the method for example ends at an operation 1611.

Figure 18 is a graph representing test results according to an example embodiment of the present disclosure. In particular, for a PE-coarse multi-class segmentation task, it was studied how shared hidden layers affected performance of the DLM neural network, and Figure 18 illustrates the intersection over union test result (TEST IoU) as a function of the test data epoch (EPOCH). It can be seen that, although sharing the same hidden weights, the performance drop is relatively slight, and is for example tolerable for at least some applications given the execution efficiency gained through not having to load new weight matrices for each layer.

An advantage of the embodiments described herein is that the neural network implementation using a PE array can be of relatively low latency, due at least in part to the fact that at least some of the data to be processed in relation with each layer of the network remains within or close to the PE that will use it, and therefore relatively few data transfers are required. Furthermore, this also permits a reduction in the memory requirements and power consumption of the circuit.

Various embodiments and variants have been described. Those skilled in the art will understand that certain features of these embodiments can be combined and other variants will readily occur to those skilled in the art. For example, while embodiments have been described in which a MAC operation is applied after each forward lateral mixing iteration such that only the accumulated result is stored after each iteration, in alternative embodiments, each forward lateral mixing operation could involve only storing to local memory the hidden vectors of the neighboring PEs. The hidden vectors are then for example concatenated together, and the MAC operation is for example applied only once over a larger matrix. This variant involves the use of a larger local memory 502 in each PE in order to store all of the hidden layer data.

Furthermore, while embodiments based on a 2D PE array have been described, it will be apparent to those skilled in the art that the principles described herein could be equally applied to a 3D PE array, in which a 3D integration process is for example used to integrate a plurality of layers of PE arrays one on top of the other. In this case, data is not only shifted amongst itself and 8 neighbours in a square neighbourhood, but amongst itself and 26 neighbours in the upper and lower layers in a cubed volume neighbourhood.

In the described embodiments, the PEs only exchange hidden state vectors with the immediate neighbours. However, PEs could alternatively or additionally perform lateral mixing with the PEs in the array that are a step of 2 away. In such a case, it would be possible to use the same expanding spiral shifting pattern as described in relation with Figure 10, whereby the first data shift operations shift in data from the corresponding "ring", and thereafter data can be shifted one step at a time.

Furthermore, the hidden layer vectors may be of different sizes for two different layers of the network. This means that for each layer, the weight matrix that is loaded from the external memory does not for example always have the same dimensions and the local PE memory sections may in that case be re-formatted between layers.

Furthermore, skip connections can also be added into the DLM model, as described in the publication by He, Kaiming et al. entitled "Deep residual learning for image recognition", Proceedings of the IEEE conference on computer vision and pattern recognition, 2016. For this, a fourth memory section is for example added to the local memory 502 of each PE that is configured to store the hidden vector of previous layers. After updating the hidden vector in a DLM layer, the results are then for example added to these previously stored hidden vectors. An advantage of this approach is that information from the previous layers is preserved for deeper models.

In the described embodiments, the core operation applied to the hidden vector states is a fully-connected layer, sometimes called a linear layer. This corresponds to calculating the inner-product between an input vector and a weight matrix. However, many variations are possible where this core operation changes. For example, there are the following two variations could be applied.

According to the first variation, in a 2D convolutional deep lateral mixer, each PE stores convolutional kernels and the data shifted in from neighbouring PEs are different channels of an input feature map. The convolutional kernels are scanned over the input feature maps to produce hidden state feature maps, which will then be used in the next layer as the input feature maps. For example, if each PE contains a 1-channel feature map, it will operate on an effective input feature map of 9-channels. In order to allow the number and size of the feature maps to be constant between DLM layers, nine learned convolutional kernels with a stride of 1 and padding of 1 can be applied on this input, resulting in a local hidden state feature map of 1-channel (after summing the partial feature maps resulting from nine channels). Alternatively, for example at least for the input layer, a stride larger than one can be used to reduce the size of hidden feature maps in successive layers. Since a single feature map will require less memory, then hidden feature maps with a greater number of channels can be stored.

According to the second variation, a DLM transformer is implemented in which an attention mechanism, for example in the form of a further weight matrix that outputs attention weights, can be used in order to weight certain PE neighbours and certain neurons with a greater or lesser importance. The concept of applying transformers in computer vision tasks is described in more detail in the publication by Dosovitskiy et at. entitled "An image is worth 16x16 words: Transformers for image recognition at scale", arXiv preprint arXiv:2010.11929 (2020).

Further still, the input data could be an event-based camera instead of an RBG or black and white/grey scale imager. In this case, the input pixels are for example binary events, based on light intensity changes at the input.

DLMs can also be useful for performing an in-sensor compression of the captured scene that can be sent to another, perhaps more powerful, computing system for further treatment, and which will use this compressed representation for a downstream task or possibly even to reconstruct the full image. Such a compression can be learned by training a so-called autoencoder model. An autoencoder is composed of two parts - the encoder that projects the input down to a low-dimensional representation - and a decoder that uses this representation to reconstruct the original input image. The DLM, as described above, can be used as an encoder where each PE outputs a vector of a given size, for example a 4-item vector. The full output over the PE array corresponds to a 16x12x4 array. This can be interpreted as a 16x12 feature map with 4-channels. This embedding can be then be input to a second model, such as a convolutional decoder, which expands the input over a series over convolutional layers using 2D transpose convolutions. The output of this model is an image with the same dimensions as the input scene captured over the PE array. To train the parameters of the DLM and the CNN a pixel-wise mean squared error loss for example can be calculated and back propagated through the two models. After training, the decoder is for example able to reconstruct images given the compressed representation that is output by the DLM. The DLM effectively learns how to abstract and compress information in the scene. For example, it has been found that an input digit structure and location can be reconstructed with high fidelity and with a relatively high compression rate of 98.4%. In such an application, the PEs are for example used to perform in-sensor pre-processing of the data image before the compressed representation is sent to a downstream task, such as localization or classification of an object in the scene, that has the advantage of providing a significant boost in the available system bandwidth.

Applications of the embodiments described herein include for example image segmentation, and object detection. In the case of object detection, instead of outputting a single value or a vector of values over classes per pixel or macropixel, the PE of each pixel or macropixel is configured to output a vector containing the coordinates of one or more bounding boxes, the distribution of classes for each of those bounding boxes and, possibly, an objectness score. Techniques such as non-max suppression are for example used to implement on the PE array in order to down-sample the boxes. Typically, this method keeps the boxes with the objectness score of a series of boxes, which have a high intersection-over-union with each other.

Another application of the embodiments described herein is a region proposal network. According to this application, an implementation of the DLM as a 3D-integrated in-sensor processing solution allows for an efficient means of proposing regions of interest to be processed by a subsequent convolutional neural network model. The convolutional neural network is for example configured to operate on the input image patch identified by the DLM and the result of the approach is therefore equivalent to a detection. For example, the first phase of processing is performed in a faster-RCNN model, as described in the publication by Ren, Shaoqing, et al., entitled "Faster r-cnn: Towards real-time object detection with region proposal networks", Advances in neural information processing systems 28 (2015). This is a particularly advantageous application, since the region of interest detection phase of such approaches is the bottleneck, and the part that consumes the most in terms of processing time and resources.

Furthermore, as already mentioned, the applications of the embodiments described herein includes applications in which the input data is not image data. For example, while embodiments are described based on 2D array of PEs, in alternative embodiments the principles described herein could be applied to a 1D array of PEs, in which each PE has two neighbors, except for the PE at the ends of the array. Such a 1D array is for example suitable for processing time-series data. For example, many sensing systems, such as EEG hats and brain-interfaces for example, are composed of an array of analogue time-series signals. The PE may therefore be integrated below an array that interfaces such signals to the PE elements. Values from the time-series may be sampled at a given rate, for example in a similar fashion to how pixels are transduced from photons at a given rate, and the DLM can be applied using a systolic PE array in a similar manner as for images.

Finally, the practical implementation of the embodiments and variants described herein is within the capabilities of those skilled in the art based on the functional description provided hereinabove.

**Claims**

1. An electronic circuit implementing a neural network, the electronic circuit comprising:

   - an array (200, 500) of processing elements (PE), each processing element (PE) comprising a data processing circuit (508) and a local memory (502), each processing element (PE) implementing one or more neurons of the neural network, the local memory (502) of each processing element (PE) being configured to store neuron data ($h_{L-1,i,j}, \varphi_{L,i,j,x,y}$) associated with the one or more neurons implemented by the neural network; and
   - data propagation circuitry (503, MUX_IN, MUX_OUT) configured to perform forward or reverse lateral mixing of the neuron data stored by the local memory (502) of each processing element by propagating, synchronously by each processing element, the neuron data to the local memory (502) of each processing element from the local memory (502) of one or more neighboring processing elements of each processing element over a plurality of processing iterations, wherein each of the processing elements is configured to receive, synchronously on each iteration, the neuron data stored by the local memory of one of the plurality of neighboring processing elements, at least partially overwriting the neuron data stored in its local memory, to process, during each processing iteration, the received neuron data in order to generate updated neuron data ($h_{L,i,j}, \varphi_{L,i,j,y,x}$) and to store the updated neuron data ($h_{L,i,j}, \varphi_{L,i,j,y,x}$) in its local memory (502), wherein each processing element is configured to use the updated neuron data ($h_{L,i,j}, \varphi_{L,i,j,y,x}$) during a subsequent processing iteration.

2. The electronic circuit of claim 1, wherein the data processing circuit (508) of each processing element (PE) is further configured to calculate an intermediate value ($a_{L,i,j}$, partial $\delta_{L-1,i,j}$) based on the neuron data from the one or more neighboring processing elements.

3. The electronic circuit of claim 2, wherein the neural network comprises an input layer and at least two hidden layers, the input layer and at least two hidden layers being implemented by the array of processing elements, wherein the data processing circuit (508) of each processing element (PE) is configured to calculate the intermediate value ($a_{L,i,j}$, partial $\delta_{L-1,i,j}$) based on the neuron data in relation with each of the hidden layers.

4. The electronic circuit of any of claims 1 to 3, wherein the data propagation circuitry (503, MUX_IN, MUX_OUT) is configured to propagate the neuron data to the local memory (508) of the one or more neighboring processing elements of the array according to an expanding spiral shift sequence.

5. The electronic circuit of any of claims 1 to 4, wherein the data propagation circuitry (503, MUX_IN, MUX_OUT) comprises, for each processing element (PE), at least one multiplexer (MUX_IN, MUX_OUT) configured to select from which neighboring processing element and/or to which neighboring processing element the neuron data is propagated.

6. The electronic circuit of any of claims 1 to 5, wherein the array (200, 500) of processing elements (PE) is configured to receive one or more images as input data.

7. The electronic circuit of any of claims 1 to 6, wherein the data propagation circuitry (503, MUX_IN, MUX_OUT) is configured to perform forward lateral mixing of the neuron data, and wherein the neuron data of each processing element (PE) is an activation state ($h_{L-1,i,j}$) of the one or more neurons implemented by the processing element (PE).

8. The electronic circuit of any of claims 1 to 6, wherein the data propagation circuitry (503, MUX_IN, MUX_OUT) is configured to perform reverse lateral mixing of the neuron data, wherein the neuron data of each processing element (PE) comprises:

   - an activation state ($h_{L-1,i,j}$) of the one or more neurons implemented by the processing element (PE); and/or
   - a parameter ($\varphi_{L,x,y,i,j}$) representing an error signal.

9. The electronic circuit of any of claims 1 to 8, wherein the neural network is a convolutional neural network.

10. An imaging device comprising a stacked formed of a top tier comprising an image sensor (1202) and a bottom tier (1204) comprising the electronic circuit of any of claims 1 to 9.

11. A method of storing, propagating and processing data in a neural network, the method comprising:

- storing neuron data ($h_{L-1,i,j}$, $\varphi_{L,i,j,x,y}$) associated with one or more neurons implemented by the neural network in a local memory (502) of each processing element (PE) of an array (200, 500) of processing elements (PE), each processing element (PE) of the array comprising a data processing circuit (508) and the local memory (502);
- calculating, by the data processing circuit (508) of each processing element (PE), an intermediate value based on the neuron data;
- performing, by data propagation circuitry (503, MUX_IN, MUX_OUT), forward or reverse lateral mixing of the neuron data stored by the local memory (502) of each processing element by propagating, synchronously by each processing element, the neuron data to the local memory (502) of each processing element from the local memory (502) of one or more neighboring processing elements of each processing element over a plurality of processing iterations, wherein each of the processing elements is configured to receive, synchronously on each iteration, the neuron data stored by the local memory of one of the plurality of neighboring processing elements, at least partially overwriting the neuron data stored in its local memory, to process, during each processing iteration, the received neuron data in order to generate updated neuron data ($h_{L-1,i,j}$, $\varphi_{L,i,j,x,y}$) and to store the updated neuron data ($h_{L,i,j}$, $\varphi_{L,i,j,x,y}$) in its local memory (502); and

using the updated neuron data ($h_{L-1,i,j}$, $\varphi_{L,i,j,x,y}$) during a subsequent processing iteration.

12. The method of claim 11, further comprising calculating, by the data processing circuit (508) of each processing element (PE), an intermediate value ($a_{L,i,j}$, partial $\delta_{L-1,i,j}$) based on the neuron data from the one or more neighboring processing elements.

13. The method of claim 12, wherein the neural network comprises an input layer and at least two hidden layers, the input layer and at least two hidden layers being implemented by the array of processing elements, the method further comprising calculating, by the data processing circuit (508) of each processing element (PE), the intermediate value ($a_{L,i,j}$, partial $\delta_{L-1,i,j}$) based on the neuron data in relation with each of the hidden layers.

**Fig. 1**

**Fig. 2**

**Fig. 3**

**Fig. 4**

**Fig. 5**

**Fig. 6**

**Fig. 7**

**Fig. 8**

**Fig. 9**

Fig. 10

Fig. 11

**Fig. 12**

EP 4 394 661 A1

Fig. 13

LOSS

$\delta_L$

403

$\delta_{L-1}$

402

$\delta_{L-2}$

401

$\delta_{L-3}$

400

MACROPIXEL

**Fig. 14**

$a_{L-2}\ h_{L-2}$  $a_{L-1}\ h_{L-1}$  $h_L = f(a_L)$

$a_L$  $h_L$

$W_{L-1}$  $W_L$

$C(h_L, t)$

$\delta_L$

$\delta_{L-1}$

$\delta_{L-2}$

**Fig. 15**

CALCULATE $\delta_L$ FOR EACH PE IN ARRAY AND SET n=>0 ——1601

CALCULATE, FOR EACH PE, GRADIENTS dC/dW$_{L,y,x}$ BASED ON ACTIVATION STATE h$_{L-1,y,x}$, SET n=>0 AND UPDATE WEIGHT ——1602

PERFORM SHIFT ——1605

n = n +1 ——1604

n = 8? ——1603 | N

Y

CALCULATE, BY EACH PE, $\varphi_{L,i,j,y,x}$ ——1606

SET n => 0 ——1607

FOR EACH PE, PARTIALLY CALCULATE $\delta_{L-1}$ BASED ON $\varphi_{L-1}$ AND ACCUMULATE RESULT ——1608

PERFORM SHIFT ——1611

n = n +1 ——1610

n = 8? ——1609 | N

Y

SET n => 0 ——1612

CALCULATE, FOR EACH PE, GRADIENTS dC/dW$_{L-1,y,x}$ BASED ON ACTIVATION STATE h$_{L-1}$ AND UPDATE WEIGHT ——1613

PERFORM SHIFT ——1616

n = n +1 ——1615

n = 8? ——1614 | N

Y

CALCULATE, BY EACH PE, $\varphi_{L-I,i,j,y,x}$ ——1617

n => 0 ——1619 | N

L= INPUT LAYER? ——1618

Y

END ——1620

**Fig. 16**

Loss = $C(h_L, t)$

**Fig. 17**

**Fig. 18**

Europäisches
Patentamt

European
Patent Office

Office européen
des brevets

# EUROPEAN SEARCH REPORT

Application Number

EP 23 21 9192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAO SHANLIN ET AL: "NeuronLink: An Efficient Chip-to-Chip Interconnect for Large-Scale Neural Network Accelerators", IEEE TRANSACTIONS ON VERY LARGE SCALE INTEGRATION (VLSI) SYSTEMS, vol. 28, no. 9, 1 September 2020 (2020-09-01), pages 1966-1978, XP055927535, PISCATAWAY, NJ, USA ISSN: 1063-8210, DOI: 10.1109/TVLSI.2020.3008185 * III.B, V, VI.C; page 1968 - page 1974; figures 1, 2, 10, 11 * | 1-13 | INV.<br>G06N3/063<br>G06N3/084<br>G06N3/0464<br>G06N3/0455<br>G06N3/048<br>G06F15/00<br>G06T1/20 |
| X | CHEN YU-HSIN ET AL: "Eyeriss v2: A Flexible Accelerator for Emerging Deep Neural Networks on Mobile Devices", IEEE JOURNAL ON EMERGING AND SELECTED TOPICS IN CIRCUITS AND SYSTEMS, IEEE, PISCATAWAY, NJ, USA, vol. 9, no. 2, 1 June 2019 (2019-06-01), pages 292-308, XP011729348, ISSN: 2156-3357, DOI: 10.1109/JETCAS.2019.2910232 [retrieved on 2019-06-10] * page 295; figures 6, 17 * * page 300 - page 302 * | 1-13 | |
| A | FR 3 113 159 A1 (COMMISSARIAT ENERGIE ATOMIQUE [FR]) 4 February 2022 (2022-02-04) * paragraph [0089]; figure 4 * | 1-13 | TECHNICAL FIELDS SEARCHED (IPC)<br><br>G06N<br>G06F<br>G06T |

-/--

The present search report has been drawn up for all claims

| Place of search | Date of completion of the search | Examiner |
|---|---|---|
| The Hague | 19 April 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 21 9192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MILLET LAURENT ET AL: "A 5500-frames/s 85-GOPS/W 3-D Stacked BSI Vision Chip Based on Parallel In-Focal-Plane Acquisition and Processing", IEEE JOURNAL OF SOLID-STATE CIRCUITS, IEEE, USA, vol. 54, no. 4, 1 April 2019 (2019-04-01), pages 1096-1105, XP011716786, ISSN: 0018-9200, DOI: 10.1109/JSSC.2018.2886325 [retrieved on 2019-03-26] * figures 2-4 * | 1-13 | |

TECHNICAL FIELDS
SEARCHED (IPC)

The present search report has been drawn up for all claims

| Place of search | Date of completion of the search | Examiner |
|---|---|---|
| The Hague | 19 April 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 9192

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2024

| Patent document cited in search report | | Publication date | Patent family member(s) | | Publication date |
|---|---|---|---|---|---|
| FR 3113159 | A1 | 04-02-2022 | EP | 3955167 A1 | 16-02-2022 |
| | | | FR | 3113159 A1 | 04-02-2022 |
| | | | US | 2022036196 A1 | 03-02-2022 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN ; YU-HSIN et al.** Eyeriss: An energy-efficient reconfigurable accelerator for deep convolutional neural networks. *IEEE journal of solid-state circuits,* 2016, vol. 52 (1), 127-138
- **HE ; KAIMING et al.** Deep residual learning for image recognition. *Proceedings of the IEEE conference on computer vision and pattern recognition,* 2016
- **DOSOVITSKIY.** An image is worth 16x16 words: Transformers for image recognition at scale. *arXiv preprint arXiv:2010.11929,* 2020
- **REN ; SHAOQING et al.** Faster r-cnn: Towards real-time object detection with region proposal networks. *Advances in neural information processing systems,* 2015, vol. 28